# EUROPEAN PATENT APPLICATION

(11) **EP 4 631 601 A1**
(43) Date of publication of application: **15.10.2025**
(21) Application number: 25169567.2
(22) Date of filing: 09.04.2025
(51) Int. Cl.: B01D 51/00, B01D 53/04

(54) **REACTOR ASSEMBLY COMPRISING A REACTOR FOR SEPARATING GASEOUS COMPONENTS FROM A GAS MIXTURE**

(30) Priority: 09.04.2024 EP 24169325
(71) Applicant: Dacma GmbH, 22559 Hamburg (DE)
(72) Inventor: Meyfarth, Daniel, 20550 Aretxabaleta (ES); Scharrer, Benjamin, 21684 Stade (DE); Spitzner, Jörg, 22559 Hamburg (DE)
(74) Representative: Uexküll & Stolberg

(57) **Abstract**

A reactor system comprises a reactor for separating gaseous components from a gas mixture in an adsorption mode. The reactor comprises a housing having an inlet portion and an outlet portion. The reactor further comprises an adsorber structure for capturing the gaseous components from the gas mixture. The adsorber structure is positioned in the housing between the inlet portion and the outlet portion. The reactor further comprises a blower for drawing the gas mixture from the inlet portion through the adsorber structure towards the outlet portion.

The reactor system further comprises a gas mixture pre-treatment device for treating the gas mixture before entering the adsorber structure. The gas mixture pre-treatment device is arranged upstream of the inlet portion in flow direction of the gas mixture. The gas mixture pre-treatment device includes a heat exchanger for heating and/or cooling the gas mixture prior to entering the adsorber structure. The heat exchanger is connected to a loop circuit containing a carrier fluid. The loop circuit is in fluid communication with a pump for circulating the fluid within the loop circuit. The loop circuit is in contact with ground, groundwater, or seawater to extract or dissipate heat. The heat exchanger has a heat transfer surface for transmitting heat from the loop circuit to the gas mixture or from the gas mixture to the loop circuit.

## Description

### FIELD OF INVENTION

The present invention relates to a reactor system comprising a reactor for separating gaseous components from a gas mixture, and a device for treating the gas mixture before entering the reactor.

### BACKGROUND OF INVENTION

As the concentration of carbon dioxide (CO₂) in the atmosphere continues to rise, and the reality of global warming challenges hits the world, global research societies are developing innovative technologies to address climate change challenges brought about by high atmospheric concentration of CO₂. One of such challenges is the direct removal of CO₂ from the atmosphere.

A typical direct air capture (DAC) process comprises an air contacting medium containing a sorbent and, a regeneration segment. The contacting medium allows ambient air to be exposed to the sorbent and enables airflow through the system to increase adsorption or absorption of CO₂ in the air.

Several DAC processes have recently been developed based on various technological approaches. For example, U.S. Pat. No. 8,163,066 B2 discloses carbon dioxide capture/regeneration structures and techniques; US 2009/0120288 A1 discloses a method for removal of carbon dioxide from air; US 2012/0174778 discloses a carbon dioxide capture/regeneration method using a vertical elevator; and WO 2010/022339 discloses a carbon dioxide capture method and facility.

One particular approach is based on a cyclic adsorption/desorption process on solid, chemically functionalized sorbent materials. For example, in WO 2010/091831 A1 a structure based on amine functionalized adsorbents materials together with a cyclic adsorption/desorption process using this material for the extraction of carbon dioxide from ambient atmospheric air is disclosed.

Therein, the adsorption process takes place at ambient atmospheric conditions at which air is streamed through the sorbent material and a portion of the CO₂ contained in the air is chemically bound at the surface of amine functionalized adsorbents. During the subsequent desorption, the material is heated and the partial pressure of carbon dioxide surrounding the sorbent is reduced by applying a vacuum or exposing the sorbent to a purge gas flow. Thereby, the previously captured carbon dioxide is removed from the sorbent material and obtained in a concentrated form.

All DAC approaches have one major challenge in common which are the very large air volumes that have to be passed through any capture system in order to extract a certain amount of CO₂ from the air. When separating CO₂ from the ambient air, regardless of the process, large volumes of air are always moved into, over or through a separator that binds the CO₂ it contains. Depending on the location, the ambient air may have low temperatures such as below 0°C or high temperatures such as above 30°C. Temperatures below 0°C increase the risk of icing of the separator. Temperatures above 30°C reduce the efficiency of the adsorption process. To ensure that DAC can also be operated efficiently at these locations, it is necessary to adapt the temperature of the ambient air before entering the adsorber so as to achieve the longest possible service life and efficient operation.

Direct Air Capture reactors often have a modular design which reduces operating costs, promotes scalability, accommodates diversity in deployment, resolves transportation challenges. Designed for efficient fit within a steel frame, multiple reactors can be placed inside a standard 6.096m (20 ft.) or 12.192m (40 ft.) shipping container. Peripheral components for operating the plurality of reactors may be stored in one or more separate 6.096m (20 ft.) or 12.192m (40 ft.) shipping containers.

It is therefore an object of the invention to provide a reactor system comprising a reactor for separating gaseous components from a gas mixture, and a device for treating the gas mixture before entering the reactor which can effectively be operated at locations with adverse environmental conditions, for example at locations with high or low ambient air temperatures and which can easily be assembled and disassembled in any location.

### SUMMARY OF THE INVENTION

The object is achieved with a reactor system as defined in claim 1. Preferred embodiments are set out in the appending sub-claims.

According to the invention, there is provided a reactor system comprising, a reactor for separating gaseous components from a gas mixture in an adsorption mode, the reactor comprising a housing having an inlet portion and an outlet portion, an adsorber structure for capturing the gaseous components from the gas mixture, wherein the adsorber structure is positioned in the housing between the inlet portion and the outlet portion, and a blower for drawing the gas mixture from the inlet portion through the adsorber structure towards the outlet portion. The reactor system further comprises a gas mixture pre-treatment device for treating the gas mixture before entering the adsorber structure, wherein the gas mixture pre-treatment device is arranged upstream of the inlet portion of the housing in flow direction of the gas mixture, wherein the gas mixture pre-treatment device includes a heat exchanger for heating and/or cooling the gas mixture prior to entering the adsorber structure, wherein the heat exchanger is connected to a loop circuit containing a carrier fluid, the loop circuit being in fluid communication with a pump for circulating the fluid within the loop circuit, and wherein the loop circuit is in contact with ground, groundwater, or seawater to extract or dissipate heat and, wherein the heat exchanger has a heat transfer surface for transmitting heat from the loop circuit to the gas mixture or from the gas mixture to the loop circuit.

It has been found that the DAC reactor works most efficiently, in particular during the adsorption mode, with the temperature of the gas mixture entering the inlet portion of the reactor in a temperature range of 5°C to 20°C depending on the used sorbent material. In case the temperature of the gas mixture, e.g. the ambient air temperature, is below or above the mentioned range, the heat exchanger may heat or cool the ambient air. Thus, the heat exchanger ensures constant conditions during adsorption mode of the DAC reactor. This omits the risk of icing of the reactor during winter times and ensures operation of the reactor in the above-mentioned optimal temperature range during summer times, as lower temperatures make adsorption more efficient. Thus, the adsorption process can be (partially) decoupled from the ambient conditions and optimized. The heat exchanger may be for example a crossflow plate heat exchanger, a (cross-flow-) counterflow plate heat exchanger or a counterflow channel heat exchanger. The design of the heat exchanger may be determined depending on the installation location and the need to influence the ambient air for optimum adsorption. The aim is always to minimize pressure loss and minimize influence on the ambient conditions which leads to the lowest energy consumption. Preferably, the heat exchanger is formed as a counterflow channel heat exchanger as compared to a crossflow plate heat exchanger or a (cross-flow-) counterflow plate heat exchanger the counterflow channel heat exchanger is the most efficient one.

Preferably, the carrier fluid flows through the loop circuit and the heat transfer surface of the heat exchanger is configured to transfer heat between the carrier fluid and the gas mixture. The carrier fluid may, depending on the ambient temperature, be heated or cooled by seawater. Seawater is very temperature-stable at e.g. around 4 to 7°C throughout the year. The water depth to which the loop circuit extends may be chosen individually for the location depending e.g. on the ambient conditions throughout the year. Alternatively, the carrier fluid is, depending on the ambient temperature, heated or cooled by a geothermal source, e.g. the ground or ground water. The loop circuit may extend to a certain depth (up to 3000 m) in a borehole in the ground.

The loop circuit may be formed as two parallel pipes which are connected at a bottom of the borehole or at their lowest point in the sea by a u-shaped connecting part. The pipes are configured such that the carrier fluid streams through one of the parallel pipes into the borehole or towards the seabed, is heated at depth and streams back to the earth's surface or sea surface through the other of the parallel pipes. Optionally, the loop circuit may contain multiple pairs of parallel pipes, each pair of parallel pipes being connected by a u-shaped connecting part. Alternatively, the loop circuit may be formed as two coaxial arranged pipes, wherein a first pipe has a smaller diameter than a second pipe and wherein the second pipe surrounds the first pipe. The first and second pipe are configured such that the carrier fluid stream in the first pipe into the borehole or towards the seabed, is heated at depth and streams back to the earth's surface or sea surface in the second pipe, i.e. through an annular space between an outer wall of the first pipe and an inner wall of the second pipe. Optionally, the loop circuit may contain multiple pairs of coaxial arranged pipes, wherein each pair of coaxial arranged pipes is configured such that the carrier fluid streams towards the bottom of the borehole or towards the sea bed, is heated and streams back to the earth's surface or sea surface.

Optionally, at least part of the heat of the carrier fluid may also be used to heat the adsorber structure, in particular the sorbent material contained in the adsorber structure, during the desorption process, e.g. in a desorption mode of the reactor. In other words: the heat of the carrier fluid may at least partially be provided to a steam generator which is configured to heat the adsorber structure, in particular the sorbent material contained in the adsorber structure, during the desorption process. This reduces the amount of energy which has to be drawn from other external devices in order to allow the heat generator to generate sufficient heat to heat the sorbent material during the desorption mode of the reactor.

In an embodiment of the present invention, the gas mixture pre-treatment device comprises a control unit for controlling the heat transferred via the heat transfer surface from the loop circuit to the gas mixture and vice versa such that the gas mixture has a constant temperature in a range from 5° to 20° when entering the inlet portion of the housing. For example, the loop circuit comprises a pump for pumping the carrier fluid through the loop circuit. Optionally, the control unit controls the speed of the pump thereby controlling the heat transferred via the heat transfer surface from the loop circuit to the gas mixture and vice versa. Thus, the temperature of the ambient air entering the inlet portion of the housing of the reactor is kept constant in between 5°C to 20°C. For example, the ambient air is heated during winter times thereby omitting the risk of icing of the reactor. During summer times the air may be cooled, as lower temperatures make adsorption more efficient.

In another embodiment of the present invention, the gas mixture pre-treatment device includes an electrostatic separator for removing particles from the gas mixture and, wherein the electrostatic separator comprises a charging portion for electrostatically charging the particles and a collecting portion for collecting the charged particles on a collector using electrostatic attraction. Preferably, the charging portion is formed as an ionizer and the collecting portion is formed as a collector. Depending on the location, the ambient air may contain various particles that can influence the efficiency of the reactor (e.g. highly saline air at offshore locations or sand-laden air in deserts). When using an electrostatic separator for removing particles from the gas mixture prior to entering the inlet portion of the reactor, the reactor may also be used at locations with adverse environmental conditions (e.g. offshore locations or desserts). It is thus ensured that DAC can also be operated efficiently at these locations wherein the longest possible service life and efficient operation is achieved. There are multiple separation systems available on the market to remove particles from a gas mixture such as cyclones, scrubber, electrostatic separators, mechanical filtering separators, mechanically filtering separators with compressed air cleaning and adsorptive filters, e.g. active carbon filters.

In connection with the present invention, it has been found that electrostatic separators are most suitable to remove particles from a gas mixture which subsequently enters a DAC reactor. The electrostatic separator is compared to the other separation systems as mentioned above capable to process very high-volume flows (up to 200,000 m³/h or more such as up to 300,000 m³/h, up to 400,000 m³/h, up to 500,000 m³/h, up to 750,000 m³/h, up to 1,000,000 m³/h or up to 1,500,0 00 m³/h). Thus, more than one reactor may be supplied by the electrostatic separator with a purified gas mixture. Moreover, electrostatic separators have a low-pressure loss (50 to 300 PA) which is ca. 8 to 20 times lower than the pressure loss of the other separation systems as mentioned above. Finally, the electrostatic separator provides better cleaning options compared to the other separation systems as mentioned above.

Electrostatic separators are known to be most suitable for atmospheres containing vapor (such as oil vapor). The electrically charged cells of the electrostatic separators will remove oil vapor and discharge clean air to the atmosphere. Thus, electrostatic separators are commonly used for kitchen exhaust systems and machineries which discharge air bearing oil vapor. The process consists of using high voltage (50 to 100kV) to charge particles either positively or negatively by the ionizer using a first electric field. A second electric field is generated between a collector and an electrode using lower voltage than 50 to 100kV, wherein the charged particles are attracted to the collector e.g. to collector plates carrying the opposite charge. Electrostatic separators provide a collection efficiency of up to 99.9 % in a single pass depending on the size of the particle to be separated.

A two-stage electrostatic separator is for example described in DE 2 737 475 A1. The separator comprises an ionizer and a collecting cell through which air to be cleaned is moved. The contaminant collecting plates in the collecting cell are cleaned by a vibrator which applies vibrations of variable frequency to the supports on which the plates are mounted.

In connection with the present invention, it has been found that electrostatic separators are not only capable to clean air bearing oil vapor but are also suitable to separate solid particles from a gas mixture such as sand particles or salt particles. In connection with the present invention, it has been found that electrostatic separators when being used in combination with a DAC-reactor, allow the operation of the DAC reactor in adverse ambient conditions such as e.g. highly saline air at offshore locations or sand-laden air in deserts. The particles entrained in the ambient air are separated by the electrostatic separator with a high fractional separation efficiency of between 95 to 99% for particle sizes smaller than 2 µm. Thus, adsorber material contained in the adsorber structure, and adsorbing the CO₂ from the ambient air is not attacked/degraded by the particles. As a consequence, the DAC reactor does not clog and the chemical resistance of the entire DAC system to aggressive particles can be guaranteed. Using an electrostatic separator leads to reduced cleaning intervals of the reactor.

Besides the very high-volume flows of up to 200,000 m³/h or more such as up to 300,000 m³/h, up to 400,000 m³/h, up to 500,000 m³/h, up to 750,000 m³/h, up to 1,000,000 m³/h or up to 1,500,0 00 m³/h and the low-pressure loss of between 50 Pa to 300 Pa electrostatic separators are capable of separating particles in the size of 0.1 µm to 21 µm from gas mixtures. Preferably, the electrostatic separator is cleaned when the DAC reactor is in a desorption mode in which carbon dioxide is removed from the sorbent material. This omits any shut-off time of the DAC reactor during cleaning of the electrostatic separator. The cleaning may start automatically, e.g. after a certain operation time of the electrostatic separator. Optionally, in case cleaning during desorption mode of the DAC reactor is not sufficient the electrostatic separators may be cleaned during a short shut-off of the DAC reactor. Preferably, the gas mixture pre-treatment device comprises a gas mixture intake, through which the gas mixtures is drawn through the gas mixture pre-treatment device towards the inlet portion of the reactor. Preferably, the gas mixture intake is positioned such that the gas mixture is drawn into the gas mixture pre-treatment device from above the gas mixture pre-treatment device. Gas mixture drawn into the gas mixture pre-treatment device from above tends to be less contaminated with particles. Preferably, the gas mixture pre-treatment device comprises baffles for optimizing the flow of the gas mixture from the gas mixture intake to the electrostatic separator and the inlet portion of the reactor.

In another embodiment of the present invention, the charging portion of the electrostatic separator is positioned upstream of the heat exchanger in flow direction of the gas mixture. Optionally, the electrostatic separator is a unit separate from the remaining components of the reactor system. The electrostatic separator can thus easily be replaced or repaired. Alternatively, the electrostatic separator may optionally also be integrated in the components of the reactor system which reduces assembly space.

In an embodiment of the present invention, the collector comprises a shell on which the separated particles of the gas mixtures are collected and along which the gas mixture streams, wherein the collector forms part of the heat exchanger and is connected to the loop circuit such that the shell forms the heat transfer surface between the loop circuit and the gas mixture. In other words: The collector forms part of the heat exchanger and is configured in such a way that the carrier fluid flows through the collector such that the shell forms a heat transfer surface between the carrier fluid and the gas mixture. Integration of the heat exchanger in the collector is advantageous as it reduces the space needed for the gas mixture pre-treatment device and thus for the reactor system. Preferably, the heat exchanger is formed as a crossflow plate heat exchanger or a (cross-flow-) counterflow plate heat exchanger. Although being less efficient compared to the counterflow channel heat exchanger, the crossflow plate heat exchanger and the (cross-flow-) counterflow plate heat exchanger are easier to be integrated into the collector. As the collector is preferably formed by multiple plates, which are covered by a shell on which the separated particles of the gas mixtures are collected, the plates may be used as a channel for the heating/cooling medium to form a crossflow plate heat exchanger or a (cross-flow-) counterflow plate heat exchanger.

In an embodiment of the present invention, the charging portion is positioned downstream of the heat exchanger in flow direction of the gas mixture. In other words: The heat exchanger is positioned upstream of the charging portion in flow direction of the gas mixture. In particular in cold ambient conditions, such as during winter times, the ambient air is e.g. warmed by the heat exchanger before entering the electrostatic separator. As the heat exchanger is positioned upstream of the charging portion, icing of the electrostatic separator in addition to the icing of the reactor is omitted.

In another embodiment of the present invention, the gas mixture pre-treatment device further comprises a particle filter arranged upstream of the heat exchanger in flow direction of the gas mixture. Preferably, the particle filter is configured to filter coarse particles from the gas mixture, e.g. particles having a size of more than about 20 µm. Thus, premature filter plugging due to coarse particles is omitted as only fine particles, e.g. particles having a size of below about 20 µm, pass the particle filter and are optionally collected by the electrostatic filter.

In an embodiment of the present invention, the reactor system comprises a plurality of reactors for separating gaseous components from a gas mixture in an adsorption mode, wherein the reactor system comprises at least one gas mixture pre-treatment device, wherein one or more reactors of the plurality of reactors are fluidically connected to the at least one gas mixture pre-treatment device in a parallel manner such that the gas mixture being drawn into the one or more reactors of the plurality of reactors is treated by the at least one gas mixture pre-treatment device before entering the inlet portion of the one or more reactors of the plurality of reactors. Using one single gas mixture pre-treatment device for a plurality of reactors is cost efficient and space saving. Due to the parallel fluidically connection of the reactors, every reactor draws the same volume flow of the gas mixture into its inlet portion. The electrostatic separator is configured to provide a volume flow of up to 200,000 m³/h or more such as up to 300,000 m³/h, up to 400,000 m³/h, up to 500,000 m³/h, up to 750,000 m³/h, up to 1,000,000 m³/h or up to 1,500,0 00 m³/h of purified gas mixture such that a plurality of reactors can be supplied with purified gas mixture simultaneously.

Optionally, the reactor, preferably up to four reactors, are housed in a container. In connection with the present invention the term container includes shipping container, storage container and any other type of container which is capable of housing one or multiple reactors according to the present invention.

In an embodiment of the present invention, the reactor, preferably up to four reactors, are housed in a 6.096m (20 ft.), 12.192m (40 ft.) PW or HC shipping container. In connection with the present invention the terms 6.096m (20 ft.), 12.192m (40 ft.) PW or HC shipping container are to be understood as 6.096m (20 feet) long, 12.192m (40 feet) long Pallet Wide (PW) or High-Cube (HC) ISO standardized and derivative intermodal shipping container. Housing multiple reactors in a container allows easy transportation and storing of the reactors. For example, multiple containers may be stacked one above the other to increase the capacity of the reactor system. Preferably, the housing of each of the reactors extends along a first longitudinal axis, and the container extends along a second longitudinal axis. Preferably, the plurality of reactors is positioned in the container such that the first longitudinal axis of the reactors and the second longitudinal axis of the container are arranged parallel to each other.

In another embodiment of the invention the reactor system further comprises an offshore structure, wherein an offshore structure is a structure that is fixed into position and extends from below to above the surface of the sea, wherein the reactor and the gas mixture treatment device are arranged on the offshore structure. Preferably, the reactor system is arranged on existing offshore structures, e.g. on offshore platforms such as drilling rigs or platforms for wind turbines. Preferably, the existing offshore structures are no longer used as for example the gas and oil fields underneath the drilling rigs are exploited. Instead of disposing the offshore structures, the existing infrastructure may be used to separate gaseous components from a gas mixture, in particular to extract CO₂ from the ambient air, by use of the reactor system according to the present invention. When for example using an existing drilling rig in combination with the reactor system according to the present invention the CO₂ extracted from the ambient air can be returned to the exploited oil and gas fields underneath the drilling rig or alternatively used directly in processes on the structure such as the production of synthetic fuels. The extracted CO₂ may be pressed into the exploited oil and gas fields via the oil or gas conveying lines by use of which oil or gas used to be exploited from the oil and gas fields. In the event of an overproduction of CO₂, the empty oil and gas fields can act as a buffer storage. The capture of CO₂ where it is subsequently stored, namely in the vicinity of exploited oil and gas fields, eliminates the transportation of CO₂ to remote locations and corresponding pipelines. Optionally, the offshore structure may be equipped with a connection interface such that ships transporting CO₂ may connect to the connection interface and unload the CO₂ to the offshore structure. The unloaded CO₂ may then be pressed into the exploited oil and gas fields underneath the drilling rig via the oil or gas conveying lines by use of which oil or gas used to be exploited from the oil and gas fields.

In an embodiment of the present invention, the reactor system comprises a plurality of reactors for separating gaseous components from a gas mixture in an adsorption mode, wherein the plurality of reactors is positioned next to each other on the offshore structure thereby forming a quadrilateral arrangement comprising four sides, wherein one or more reactors of the plurality of reactors are arranged along each of the four sides, wherein the four sides enclose an inner area of the reactor system and are surrounded by an outer area of the reactor system, wherein the plurality of reactors is oriented such that the inlet portions of each of the reactors face the inner area and wherein the outlet portions of each of the reactors face the outer area, such that the gas mixture is drawn by the blowers from the inner area towards each of the inlet portions of the plurality of reactors through the adsorber structures towards the outlet portions of each of the reactors and the outer area. The quadrilateral arrangement of the reactors may be a square shape or a rectangular shape. Many of the offshore structures, in particular most of the offshore platforms, have a square or rectangular shape. Thus, arranging the reactors in a quadrilateral arrangement on the offshore structure makes the best use of the space available. Preferably, multiple reactors are housed in a 6.096m (20 ft.), 12.192m (40 ft.) PW or HC shipping container. In particular preferred, multiple reactors are housed in a 6.096m (20 ft.) PW or HC shipping container. This allows a modular arrangement of the reactor system on the offshore structure. For example, one or multiple containers may be removed and or replaced in case one or more of the reactors in the container have to be repaired or replaced. The gas mixture drawn into the reactor system from the inside area of the reactor system tends to be less contaminated with particles, e.g. salt particles, than the gas mixture in the outer area of the reactor system. Thus, arranging the reactors to draw the gas mixture from the inner area of the reactor system allows a longer operation time of the reactors before cleaning of the reactors is needed.

In another embodiment of the present invention, the reactor system comprises a plurality of gas mixture pre-treatment devices, wherein one or more of the plurality of reactors arranged along one side of the quadrilateral arrangement are fluidically connected to one gas mixture pre-treatment device of the plurality of gas mixture pre-treatment devices in a parallel manner, such that the gas mixture being drawn into the one or more reactors along the one side of the quadrilateral arrangement is treated by the one gas mixture pre-treatment device before entering the inlet portion of the one or more reactors along the one side of the quadrilateral arrangement. Depending on the volume flow of the gas mixture which the heat exchanger and/or the electrostatic separator is capable to process, one or more of the plurality of reactors arranged along one side of the quadrilateral arrangement are fluidically connected to the one gas mixture pre-treatment device. It is in particular preferred that as many reactors as possible are connected to one gas mixture pre-treatment device thereby saving costs and space.

In an embodiment of the present invention, the reactor system comprises four gas mixture pre-treatment devices, wherein each reactor of the plurality of reactors arranged along a first side of the four sides of the quadrilateral arrangement is fluidically connected to a first gas mixture pre-treatment device, wherein each reactor of the plurality of reactors arranged along a second side of the four sides of the quadrilateral arrangement is fluidically connected to a second gas mixture pre-treatment device, wherein each reactor of the plurality of reactors arranged along a third side of the four sides of the quadrilateral arrangement is fluidically connected to a third gas mixture pre-treatment device and, wherein each reactor of the plurality of reactors arranged along a fourth side of the four sides of the quadrilateral arrangement is fluidically connected to a fourth gas mixture pre-treatment device. Preferably, the reactors are housed in a 6.096m (20 ft.), 12.192m (40 ft.) PW or HC shipping container. More preferably, the gas mixture pre-treatment devices are housed in boxes which correspond at least in height to the used shipping container for the reactors. This allows a modular arrangement of the reactor system.

In another embodiment of the present invention, the quadrilateral arrangement has four edges, wherein each two adjacent sides of the four sides of the quadrilateral arrangement meet in one of the edges and, wherein the system further comprises one or more compartments which house peripheral components for operating the plurality of reactors and, wherein the one or more compartments are arranged at one or more of the edges. Preferably, the compartments for housing the peripheral components are 6.096m (20 ft.), 12.192m (40 ft.) PW or HC shipping container. Preferably, the peripheral components are e.g. a control system for controlling the operation of the DAC reactors and/or an energy storage to supply the reactors with energy and or to power further electric component of the reactor system. The reactor system may for example be connected to a power line supplying electricity from a wind farm. Thus, operation of the reactor system using renewable energy is possible.

The above object is also achieved by the use of the reactor system as described above for separating gaseous components from atmospheric air. Preferably, gaseous components are for example carbon dioxide, methane or sulfur dioxide which are captured from a gas mixture such as atmospheric air. The reactor according to the present invention is in particular adapted for separating carbon dioxide from atmospheric air in an adsorption mode.

### BRIEF DESCRIPTION OF THE FIGURES

The invention will now be described in connection with three exemplary embodiments shown in the Figures in which:
- Figure 1: shows a schematic view of a system comprising a reactor system and an offshore structure according to the present invention,
- Figure 2: shows a schematic view of a reactor system according to the present invention,
- Figure 3: shows a perspective view of the reactor system of Fig. 2,
- Figure 4: shows a schematic view of a reactor system according to a second embodiment of the present invention,
- Figure 5: shows a perspective view of the reactor system of Fig. 4,
- Figure 6: shows a schematic view of a reactor system according to a third embodiment and
- Figure 7: shows a perspective view of the reactor system of Fig. 6.

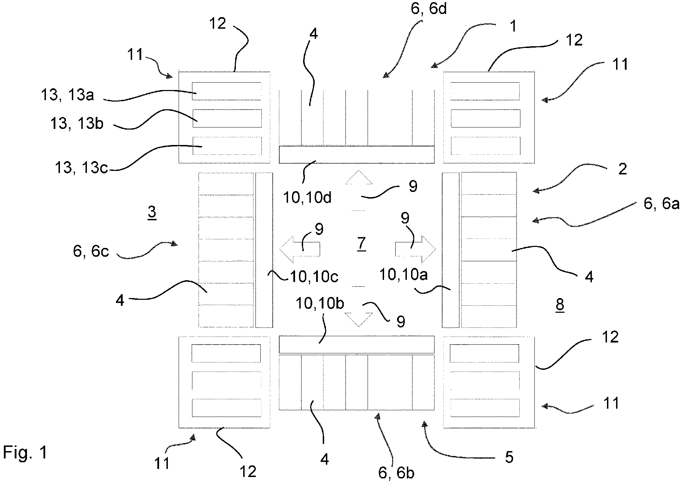

Fig. 1 shows a reactor system 1 which is used to capture gaseous components from atmospheric air and an offshore structure 3. The reactor system 2 is arranged on the offshore structure 3. The offshore structure, 3 is a structure that is fixed into position and extends from below to above the surface of the sea, e.g. an offshore platform such as a drilling rig or a platform for wind turbines.

The reactor system 2 comprises a plurality of reactors (not shown) for separating gaseous components such as carbon dioxide, methane or sulfur dioxide from a gas mixture such as atmospheric air in an adsorption mode. The reactors are housed in 6.096m (20 ft.) PW or HC shipping containers 4, wherein up to four reactors are housed in one 6.096m (20 ft.) shipping container 4. In connection with the present invention the terms 6.096m (20 ft.), 12.192m (40 ft.) PW or HC shipping container are to be understood as 6.096m (20 feet) long, 12.192m (40 feet) long Pallet Wide (PW) or High-Cube (HC) ISO standardized and derivative intermodal shipping container.

The plurality of reactors in the shipping containers 4 are positioned next to each other on the offshore structure 3 thereby forming a quadrilateral arrangement 5 in the form of a square comprising four sides 6, namely a first side 6a, a second side 6b, a third side 6c and a fourth side 6d. Multiple reactors of the plurality of reactors in the shipping containers 4 are arranged along each of the four sides 6. The four sides 6 enclose an inner area 7 of the reactor system 2 and are surrounded by an outer area 8 of the reactor system 2.

The plurality of reactors in the shipping containers 4 are oriented such that inlet portions of each of the reactors face the inner area 7 and outlet portions of each of the reactors face the outer area 8. As indicated by arrows 9 in Fig. 1, the gas mixture is drawn by blowers (not shown) of each of the reactors from the inner area 7 towards each of the inlet portions of the plurality of reactors through adsorber structures of each of the reactors towards the outlet portions of each of the reactors and the outer area 8 of the system.

The reactor system 2 comprises four gas mixture pre-treatment devices 10 for treating the gas mixture before entering the inlet portion of each of the reactors, namely a first gas mixture pre-treatment device 10a, a second gas mixture pre-treatment device 10b, a third gas mixture pre-treatment device 10c and a fourth gas mixture pre-treatment device 10 d. The reactors arranged along the first side 6a of the quadrilateral arrangement 5 are fluidically connected to the first gas mixture pre-treatment device 10a in a parallel manner. The reactors arranged along the second side 6b of the quadrilateral arrangement 5 are fluidically connected to the second gas mixture pre-treatment device 10 b in a parallel manner. The reactors arranged along the third side 6c of the quadrilateral arrangement 5 are fluidically connected to the third gas mixture pre-treatment device 10c in a parallel manner. The reactors arranged along the fourth side 6d of the quadrilateral arrangement 5 are fluidically connected to the fourth gas mixture pre-treatment device 10d in a parallel manner.

The quadrilateral arrangement 5 has four edges 11, wherein each two adjacent sides (6a and 6b, 6b and 6c, 6c and 6d, 6d and 6a) of the four sides 6 of the quadrilateral arrangement 5 meet in one of the edges 11. The reactor system 2 further comprises four compartments 12 which house peripheral components 13, such as a control system 13a for controlling the reactors, an energy storage 13b for storing energy and/or to supply the reactors with energy and a unit 13c for controlling the temperature vacuum swing adsorption of each of the reactors. Each of the four compartments 12 is arranged on one of the edges 11. The compartments 12 may also be formed as 6.096m (20 ft.) or 12.192m (40 ft.) PW or HC shipping containers 4.

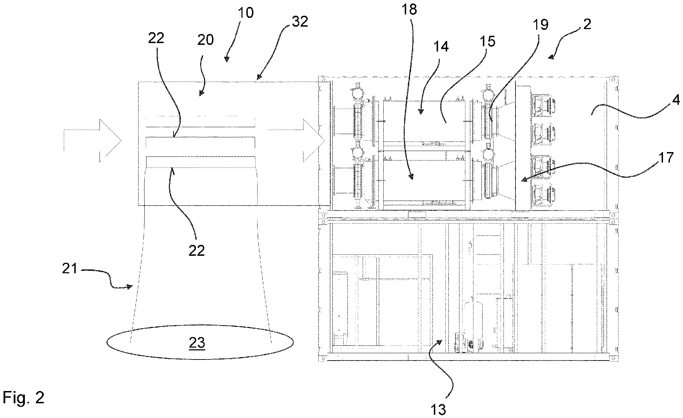

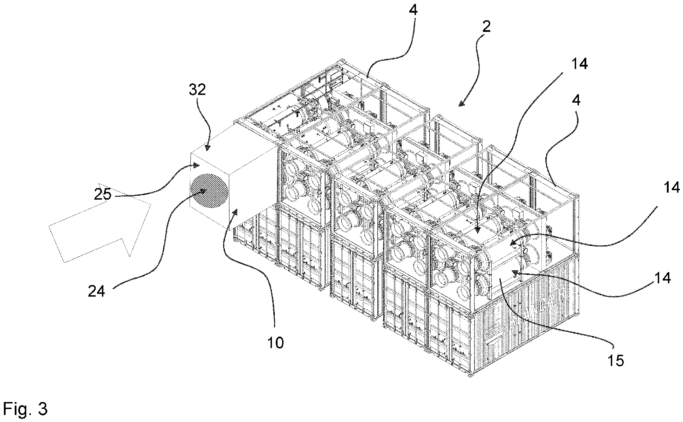

Figs. 2 and 3 show a first embodiment of a reactor system 2 in detail. The reactor system 2 comprises twenty reactors 14 for separating gaseous components from a gas mixture in an adsorption mode. The reactors 14 are arranged inside five 6.096m (20 ft.) PW or HC shipping container 4 in two rows stacked above each other (see Fig. 3). Each shipping container 4 houses four reactors 14. For the ease of simplicity, Fig. 2 only shows two reactors 14 which are stacked above each other and housed in one container 4.

The reactor system 2 further comprises the peripheral components 13 for operating the reactors 14. The peripheral components 13 are stored in five separate 6.096m (20 ft.) shipping containers 4. Contrary to the arrangement as shown in Fig. 1, the containers 4 according to Figs. 2 and 3 which house the reactors 14 are stacked above the containers 4 housing the peripheral components 13.

Each of the reactors 14 comprises a housing 15 having an inlet portion 16 and an outlet portion 17. The reactor 14 further comprises an adsorber structure 18 for capturing the gaseous components from the gas mixture. The adsorber structure 18 is positioned in the housing 15 between the inlet portion 16 and the outlet portion 17. The reactor 14 further comprises a blower 19 for drawing the gas mixture from the inlet portion 16 through the adsorber structure 18 towards the outlet portion 19.

The reactor system 2 further comprises at least one gas mixture pre-treatment device 10 for treating the gas mixture before entering the adsorber structure 18 of each of the reactors 14. The gas mixture pre-treatment device 10 is arranged upstream of the inlet portion 16 of each of the reactors 14 in flow direction of the gas mixture. As shown in Fig. 3 four reactors 14 of the twenty reactors 14 are fluidically connected to the one gas mixture pre-treatment device 10 in a parallel manner such that the gas mixture being drawn into each of the four reactors 14 is treated by the at least one gas mixture pre-treatment device 10 before entering the inlet portion 16 of each of the four reactors 14. Four additional gas mixture pre-treatment devices 10 may be installed in the arrangement as shown in Fig 3 to supply the remaining sixteen reactors 14 of the twenty reactors 14 with a treated gas mixture. Alternatively, the one gas mixture pre-treatment device 10 as shown in Fig. 3 may be modified such that all twenty reactors 14 are connected to the one gas mixture pre-treatment device 10.

The gas mixture pre-treatment device 10 includes a heat exchanger 20 for heating and/or cooling the gas mixture. The heat exchanger 20 is connected to a loop circuit 21 containing a carrier fluid. The loop circuit 21 is in fluid communication with a pump (not shown) for circulating the fluid within the loop circuit 21. The heat exchanger 20 has multiple heat transfer surfaces 22 for transmitting heat from the loop circuit 21 to the gas mixture or from the gas mixture to the loop circuit 21. The loop circuit 21 is in contact with ground, groundwater, or seawater 23 to extract or dissipate heat. For example, seawater is very temperature-stable at e.g. around 4 - 7°C throughout the year. Depending on whether the ambient air temperature is below or above the temperature of the seawater, the loop circuit 21 transfers heat to the gas mixture via the heat transfer surface 22 of the heat exchanger 20 or vice versa. Alternatively, the loop circuit 21 is in contact with ground or groundwater. In this case the loop circuit extends into a borehole which is deeper than 1000m (e.g. 3000m).

The loop circuit 21 may be formed as two parallel pipes which are connected at a bottom of the borehole or at their lowest point in the sea by a u-shaped connecting part. The pipes are configured such that the carrier fluid streams through one of the parallel pipes into the borehole or towards the seabed, is heated at depth and streams back to the earth's surface or sea surface through the other of the parallel pipes.

Alternatively, the loop circuit may be formed as two coaxial arranged pipes, wherein a first pipe has a smaller diameter than a second pipe and wherein the second pipe surrounds the first pipe. The first and second pipe are configured such that the carrier fluid stream in the first pipe into the borehole or towards the seabed, is heated at depth and streams back to the earth's surface or sea surface in the second pipe, i.e. through an annular space between an outer wall of the first pipe and an inner wall of the second pipe.

The gas mixture pre-treatment device 10 further comprises a control unit (not shown) for controlling the heat transferred via the heat transfer surface 22 from the loop circuit 21 to the gas mixture and vice versa such that the gas mixture has a constant temperature in a range from 5° to 20° when entering the inlet portion 16 of the housing 15. For example, the loop circuit 21 comprises the pump which circulates seawater through the loop circuit 21. The control unit may control the speed or the power consumption of the pump thereby controlling the heat transferred via the heat transfer surface 22 from the loop circuit 21 to the gas mixture and vice versa.

The gas mixture pre-treatment device 10 comprises a gas mixture intake 24, through which the gas mixtures is drawn through the gas mixture pre-treatment device 10 towards the inlet portion 16 of each of the reactors 14. The gas mixture intake 24 is positioned at a front face 25 of the gas mixture pre-treatment device 10. The front face 25 faces away from the containers 4 in which the reactors 14 are housed.

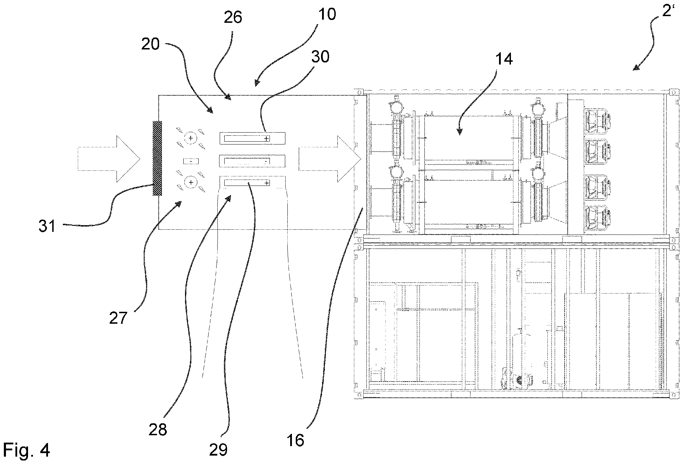

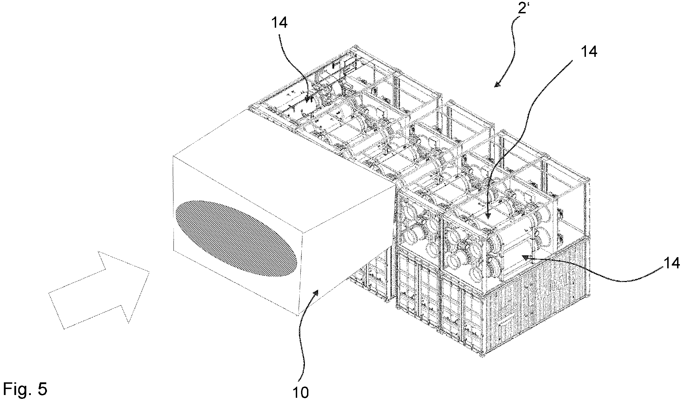

Figs. 4 and 5 show a second embodiment of a reactor system 2 in detail. The reactor system 2' differs from the one shown in Figs. 2 and 3 in that the gas mixture pre-treatment device 10 further includes an electrostatic separator 26 for removing particles such as sand particles or salt particles from the gas mixture. The electrostatic separator 26 comprises a charging portion 27 for electrostatically charging the particles which is formed as an ionizer and a collecting portion 28 for collecting the charged particles on a collector 29 using electrostatic attraction.

The collector 29 comprises a shell 30 on which the separated particles of the gas mixtures are collected and along which the gas mixture streams. The collector 29 forms part of the heat exchanger 20 of the gas mixture pre-treatment device 10 and is configured in such a way that a carrier fluid flows through the collector 29 such that the shell 30 forms the heat transfer surface 22 between the carrier fluid and the gas mixture. Thus, the charging portion 27 of the electrostatic separator 26 is positioned upstream of the heat ex-changer 20 in flow direction of the gas mixture. In other words: The heat exchanger 20 is positioned between the charging portion 27 of the electrostatic separator 26 and the inlet portion 16 of the reactors 14.

Alternatively, the electrostatic separator 26 may also be formed as a part which is separate from the heat exchanger 20. The charging portion 27 of the electrostatic separator 26 may be positioned downstream of the heat exchanger 20 in flow direction of the gas mixture. In other words: The heat exchanger 20 may be positioned upstream of the charging portion 27 in flow direction of the gas mixture. Alternatively, the electrostatic separator 26 may be positioned upstream of the heat exchanger 20 in flow direction of the gas mixture. In other words: The heat exchanger 20 may be positioned between the collecting portion 28 of the electrostatic separator 26 and the inlet portion 16 of the reactor 14.

The gas mixture pre-treatment device 10 further comprises a particle filter 31 arranged upstream of the electrostatic separator 26 in flow direction of the gas mixture. The particle filter 31 is configured to filter coarse particles from the gas mixture, e.g. particles having a size of more than 20 µm. Naturally, a particle filter 31 may also be arranged upstream of the heat exchanger 20 as shown in Figs. 2 and 3 in flow direction of the gas mixture.

The reactor system 2' further differs from the one shown in Figs. 2 and 3 in that twelve reactors 14 of the twenty reactors 14 are fluidically connected to the one gas mixture pre-treatment device 10 in a parallel manner such that the gas mixture being drawn into each of the twelve reactors 14 is treated by the at least one gas mixture pre-treatment device 10 before entering the inlet portion 16 of each of the twelve reactors 14. One additional gas mixture pre-treatment device 10 may be installed in the arrangement as shown in Fig. 5 to supply the remaining eight reactors 14 of the twenty reactors 14 with a treated gas mixture. Alternatively, the one gas mixture pre-treatment device 10 as shown in Fig. 5 may be modified such that all twenty reactors 14 are connected to the one gas mixture pre-treatment device 10.

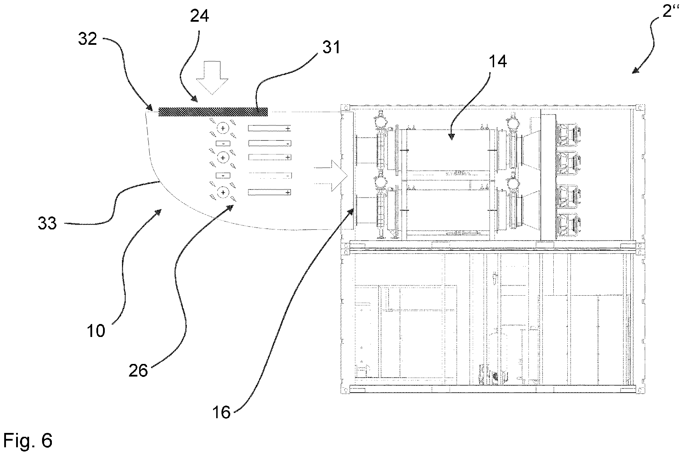

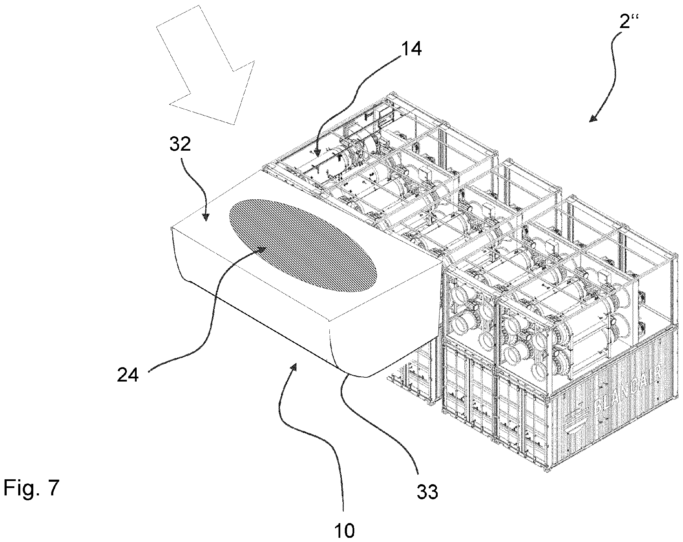

Figs. 6 and 7 show a third embodiment of a reactor system 2 in detail. The reactor system 2" differs from the one shown in Figs. 4 and 5 in the arrangement of the gas mixture intake 24 of the gas mixture pre-treatment device 10. The gas mixture intake 24 is positioned at a top face 32 of the gas mixture pre-treatment device 10 such that the gas mixture is drawn into the gas mixture pre-treatment device 10 from above the gas mixture pre-treatment device 10. The gas mixture pre-treatment device comprises baffles 33 for optimizing the flow of the gas mixture from the gas mixture intake 24 to the electrostatic separator 26 and the inlet portion 16 of the reactor 14.

Preferably, the particle filter 31 is arranged adjacent to the gas mixture intake 24 in streaming direction of the gas mixture. Thus, the gas mixture entering the gas mixture intake 24 is deflected by the baffles 33 about an angle of ca. 90 degrees before entering the electrostatic separator 26.

Naturally, the gas mixture intake 24 may also be positioned at a top face 32 of the gas mixture pre-treatment device 10 as shown in Figs. 2 and 3. In this case, the gas mixture pre-treatment device 10 comprised baffles 33 for optimizing the flow of the gas mixture from the gas mixture intake 24 to the heat exchanger 20 and the inlet portion 16 of the reactor 14.

### Reference numerals

- 2, 2', 2": Reactor system
- 3: Offshore structure
- 4: 6.096m (20 ft). shipping container
- 5: Quadrilateral arrangement
- 6, 6a-d: Four sides (quadrilateral arrangement)
- 7: Inner area (system)
- 8: Outer area (system)
- 9: Arrows
- 10, 10a-d: Gas mixture pre-treatment device
- 11: Four edges (quadrilateral arrangement)
- 12: Compartments
- 13, 13a-d: Peripheral components
- 14: Reactor
- 15: Housing (reactor)
- 16: Inlet portion (housing)
- 17: Outlet portion (housing)
- 18: Adsorber structure
- 19: Blower (reactor)
- 20: Heat exchanger
- 21: Loop circuit
- 22: Heat transfer surface (heat exchanger)
- 23: ground, groundwater, or seawater
- 24: gas mixture intake
- 25: front face (gas mixture pre-treatment device)
- 26: Electrostatic separator
- 27: Charging portion (Electrostatic separator)
- 28: Collecting portion (Electrostatic separator)
- 29: collector (Electrostatic separator)
- 30: shell (collector)
- 31: particle filter
- 32: top face (gas mixture pre-treatment device)
- 33: baffles

## Claims

1. A reactor system (2, 2', 2") comprising,
a reactor (14) for separating gaseous components from a gas mixture in an adsorption mode, the reactor (14) comprising
a housing (15) having an inlet portion (16) and an outlet portion (17),
an adsorber structure (18) for capturing the gaseous components from the gas mixture, wherein the adsorber structure (18) is positioned in the housing (15) between the inlet portion (16) and the outlet portion (17), and
a blower (19) for drawing the gas mixture from the inlet portion (16) through the adsorber structure (18) towards the outlet portion (17),
wherein the reactor system (2, 2', 2") further comprises a gas mixture pre-treatment device (10, 10a, 10b, 10c, 10d) for treating the gas mixture before entering the adsorber structure (18), the gas mixture pre-treatment device (10, 10a, 10b, 10c, 10d) being arranged upstream of the inlet portion (16) of the housing (15) in flow direction of the gas mixture, wherein the gas mixture pre-treatment device (10, 10a, 10b, 10c, 10d) includes a heat exchanger (20) for heating and/or cooling the gas mixture prior to entering the adsorber structure (18),
wherein the heat exchanger (20) is connected to a loop circuit (21) containing a carrier fluid, the loop circuit (21) being in fluid communication with a pump for circulating the fluid within the loop circuit, and wherein the loop circuit is in contact with ground, groundwater, or seawater to extract or dissipate heat;
and wherein the heat exchanger (20) has a heat transfer surface (22) for transmitting heat from the loop circuit to the gas mixture or from the gas mixture to the loop circuit.

2. The reactor system of claim 1, wherein the gas mixture pre-treatment device (10, 10a, 10b, 10c, 10d) comprises a control unit for controlling the heat transferred via the heat transfer surface (22) from the loop circuit (21) to the gas mixture and vice versa such that the gas mixture has a constant temperature in a range from 5° to 20° when entering the inlet portion (16) of the housing (15).

3. The reactor system of any one of claims 1 or 2, wherein the gas mixture pre-treatment device (10, 10a, 10b, 10c, 10d) further comprises an electrostatic separator (26) for removing particles from the gas mixture and,
wherein the electrostatic separator (26) comprises a charging portion (27) for electrostatically charging the particles and a collecting portion (28) for collecting the charged particles on a collector (29) using electrostatic attraction.

4. The reactor system of claim 4, wherein the charging portion (27) of the electrostatic separator (26) is positioned upstream of the heat exchanger (20) in flow direction of the gas mixture.

5. The reactor system of claim 4, wherein the collector (29) comprises a shell (30) on which the separated particles of the gas mixture are collected and along which the gas mixture streams, and wherein the collector (29) forms part of the heat exchanger (20) and is connected to the loop circuit (21) such that the shell (30) forms the heat transfer surface (22) between the loop circuit (21) and the gas mixture.

6. The reactor system of claim 4, wherein the charging portion (27) is positioned downstream of the heat exchanger (20) in flow direction of the gas mixture.

7. The reactor system of any one of claims 1 to 6, wherein the gas mixture pre-treatment device (10, 10a, 10b, 10c, 10d) further comprises a particle filter (31) arranged upstream of the heat exchanger (20) in flow direction of the gas mixture.

8. The reactor system of any one of claims 1 to 7, wherein the reactor system (2, 2', 2") comprises a plurality of reactors (14) for separating gaseous components from a gas mixture in an adsorption mode,
wherein the reactor system (2) comprises at least one gas mixture pre-treatment device (10, 10a, 10b, 10c, 10d), wherein one or more reactors (14) of the plurality of reactors (14) are fluidically connected to the at least one gas mixture pre-treatment device (10, 10a, 10b, 10c, 10d) in a parallel manner such that the gas mixture being drawn into the one or more reactors (14) of the plurality of reactors (14) is treated by the at least one gas mixture pre-treatment device (10, 10a, 10b, 10c, 10d) before entering the inlet portion (16) of the one or more reactors (14) of the plurality of reactors (14).

9. The reactor system of any one of claims 1 to 8, wherein the reactor, preferably up to four reactors (14), are housed in a 6.096m (20 ft.) or 12.192m (40 ft.) PW or HC shipping container (4).

10. The reactor system of any one of claims 1 to 9, further comprising an offshore structure (3), wherein an offshore structure is a structure that is fixed into position and extends from below to above the surface of the sea,
wherein the reactor (14) and the gas mixture treatment device (10, 10a, 10b, 10c, 10d) are arranged on the offshore structure (3).

11. The reactor system of claim 10, wherein the offshore structure is selected from a man-made drilling platform, oil well, dredging operation, offshore wind farm, or ocean data platform.

12. The reactor system of any one of claims 1 to 11, wherein the reactor system (2, 2', 2") comprises a plurality of reactors (14) for separating gaseous components from a gas mixture in an adsorption mode,
wherein the plurality of reactors (14) is positioned next to each other on the offshore structure (3) thereby forming a quadrilateral arrangement (5) comprising four sides (6, 6a, 6b, 6c, 6d),
wherein one or more reactors (14) of the plurality of reactors (14) are arranged along each of the four sides (6, 6a, 6b, 6c, 6d),
wherein the four sides (6, 6a, 6b, 6c, 6d) enclose an inner area (7) of the reactor system (2, 2', 2") and are surrounded by an outer area (8) of the reactor system (2, 2', 2"),
wherein the plurality of reactors (14) is oriented such that the inlet portions (16) of each of the reactors (14) face the inner area (7) and
wherein the outlet portions (17) of each of the reactors (14) face the outer area (8), such that the gas mixture is drawn by the blowers (19) from the inner area (7) towards each of the inlet portions (16) of the plurality of reactors (14) through the adsorber structures (18) towards the outlet portions (17) of each of the reactors (14) and the outer area (8).

13. The reactor system of claim 12, wherein the reactor system (2, 2', 2") comprises a plurality of gas mixture pre-treatment devices (10, 10a, 10b, 10c, 10d),
wherein one or more of the plurality of reactors (14) arranged along one side (6, 6a, 6b, 6c, 6d) of the quadrilateral arrangement (5) are fluidically connected to one gas mixture pre-treatment device (10, 10a, 10b, 10c, 10d) of the plurality of gas mixture pre-treatment devices (10, 10a, 10b, 10c, 10d) in a parallel manner, such that the gas mixture being drawn into the one or more reactors (14) along the one side (6, 6a, 6b, 6c, 6d) of the quadrilateral arrangement (5) is treated by the one gas mixture pre-treatment device (10, 10a, 10b, 10c, 10d) before entering the inlet portion (16) of the one or more reactors (14) along the one side (6, 6a, 6b, 6c, 6d) of the quadrilateral arrangement (5).

14. The reactor system of claim 13, wherein the reactor system (2, 2', 2") comprises four gas mixture pre-treatment devices (10, 10a, 10b, 10c, 10d), wherein each reactor (14) of the plurality of reactors (14) arranged along a first side (6a) of the four sides (6, 6a, 6b, 6c, 6d) of the quadrilateral arrangement (5) is fluidically connected to a first gas mixture pre-treatment device (10a), wherein each reactor (14) of the plurality of reactors (14) arranged along a second side (6b) of the four sides (6, 6a, 6b, 6c, 6d) of the quadrilateral arrangement (5) is fluidically connected to a second gas mixture pre-treatment device (10b), wherein each reactor (14) of the plurality of reactors (14) arranged along a third side (6c) of the four sides (6, 6a, 6b, 6c, 6d) of the quadrilateral arrangement (5) is fluidically connected to a third gas mixture pre-treatment device (10c) and, wherein each reactor (14) of the plurality of reactors (14) arranged along a fourth side (6d) of the four sides (6, 6a, 6b, 6c, 6d) of the quadrilateral arrangement (5) is fluidically connected to a fourth gas mixture pre-treatment device (10d).

15. The reactor system of claim 12, wherein the quadrilateral arrangement (5) has four edges (11), wherein each two adjacent sides (6a and 6b, 6b and 6c, 6c and 6d, 6d and 6a) of the four sides (6, 6a, 6b, 6c, 6d) of the quadrilateral arrangement (5) meet in one of the edges (11) and, wherein the reactor system (2, 2', 2") further comprises one or more compartments (12) which house peripheral components (13) for operating the plurality of reactors (14) and, wherein the one or more compartments (12) are arranged at one or more of the edges (11).

16. A use of the reactor system of any one of claims 1 to 15 for separating gaseous components from atmospheric air.
